# EUROPÄISCHE PATENTANMELDUNG

(11) **EP 2 527 394 A2**
(43) Veröffentlichungstag der Anmeldung: **28.11.2012**
(21) Anmeldenummer: 12003443.4
(22) Anmeldetag: 04.05.2012
(51) Int. Cl.: C08K 3/00, E04B 1/76, E04F 21/08, C08L 97/02

(54) **Verfahren zur Herstellung von Zellulosedämmstoffen und neue Zellulosedämmstoffe**

(30) Priorität: 23.05.2011 CH 8742011
(71) Anmelder: Pavatex SA, 1701 Fribourg (CH)
(72) Erfinder: Schubiger, Hubert, 8730 Uznach (CH); Brombacher, Volker, 5644 Auw (CH)
(74) Vertreter: Grimm, Siegfried

(57) **Zusammenfassung**

Beschrieben werden Zellulosedämmstoffe (LFCI), bestehend aus 88-97% einer Mischung von Papierfasern und Holzfasern im Verhältnis 80/20 bis 20/80 und 3-12% Additive sowie deren Herstellung und Verwendung. Ferner wird eine Anlage beschrieben, geeignet für die Herstellung dieser Zellulosedämmstoffe.

## Beschreibung

Die Erfindung betrifft verbesserte Zellulosedämmstoffe (LFCI); eine Einblasdämmung enthaltend diese LFCI, Baukörper mit dieser Einblasdämmung sowie Verfahren und Anlagen zur Herstellung von LFCI.

LFCI werden als loses Material hergestellt und an die Baustelle geliefert. Dort erfolgt ein Einblasen dieses Materials in Hohlräume des Bauwerkes zur Dämmzwecken unter Bildung einer Einblasdämmung. Alternativ kann LFCI auch in Fertigteilewerken zur Herstellung von vorgefertigten Fertigteilen eingesetzt werden. LFCI und die daraus gebildeten Einblasdämmungen müssen daher eine Reihe von Kriterien erfüllen, wie Dämmung, Setzverhalten, Resistenz gegen Pilzbefall, Brandverhalten usw.

Willoc (DE19516186) beschreibt ein Dämmmaterial aus Naturprodukten, welches auch als loses Isoliermaterial verwendet werden kann, sowie entsprechende Herstellungsverfahren. Zweck dieses Dokumentes ist es, den Gehalt an Papier im Dämmmaterial zu reduzieren. Ferner weisen die offenbarten Dämmmaterialien einen sehr hohen Gehalt an Additiven auf. Schlussendlich ist das Herstellungsverfahren aufwändig, da mehrere Entstaubungsschritte durchgeführt werden müssen.

Shutt (WO2010/040066 und US 6025027) beschreibt entstaubte, flammhemmende LFCI, hergestellt aus Papierfasern, und ein entsprechendes Herstellungsverfahren. Nachteilig an diesem Verfahren ist unter anderem, dass ein grosser Anteil an Staub als Nebenprodukt entsteht.

Lörcher (EP1203845) beschreibt einen Dämmstoff aus granulierten Holzfasern und ein entsprechendes Herstellungsverfahren; über das Aufbringen von Flammschutzmitteln werden keine detaillieren Angaben gemacht. Nachteilig an diesem Verfahren ist unter anderem, dass ein Granulierungsschritt zusätzlich erfolgt.

Nägele (DE19829277) beschreibt die Verwendung spezifischer wässriger Lösungen als Brandschutzmittel bei der Herstellung von Dämmmaterialien. Nachteilig an diesem Verfahren ist die Einschränkung auf spezifische Brandschutzmittel sowie der hohe Gehalt an Additiven im Endprodukt.

Eine Aufgabe der vorliegenden Erfindung ist daher die Bereitstellung eines verbesserten Verfahrens zur Erzeugung von LFCI. Von besonderer Bedeutung ist, eine wirtschaftlich operierendes Verfahren und eine entsprechende Anlage zur Verfügung zu stellen, die qualitativ hochwertige Produkte erzeugt und die geltenden Produktnormen erfüllt. Vorteilhaft ist es ferner, die Menge an benötigten Additiven und/oder die Menge an Neben- bzw. Abfallprodukten so gering wie möglich zu halten.

Eine weitere Aufgabe der vorliegenden Erfindung ist die Bereitstellung von verbesserten LFCI. Von besonderer Bedeutung ist, qualitativ hochwertige Materialien zur Verfügung zu stellen, welche die geltenden Produktnormen erfüllen. Vorteilhaft ist es ferner, die Menge an benötigten Additiven (wie BSM) so gering wie möglich zu halten.

Die vorstehend umrissenen Aufgaben werden gemäss den unabhängigen Ansprüchen gelöst. Die abhängigen Ansprüche stellen vorteilhafte Ausführungsformen dar.

Sofern sich aus dem direkten Zusammenhang keine andere Bedeutung ergibt, haben die folgenden Begriffe die hier angegebene Bedeutung

Die im Zusammenhang mit der vorliegenden Erfindung gegebenen allgemeinen, bevorzugten und besonders bevorzugten Ausführungsformen, Bereiche usw. können beliebig miteinander kombiniert werden. Ebenso können einzelne Definitionen, Ausführungsformen usw. entfallen bzw. nicht relevant sein.

Prozentangaben sind, soweit nicht anders vermerkt, als Massen-% angegeben.

Der Begriff "Zellulosedämmstoff" ("LFCI") ist bekannt und bspw. in den Normen FprEN15101-1 und -2 beschrieben (Schluss-Entwurf). Zellulosedämmstoffe werden auch Einblass-Dämmmaterial, Loose-Fill Cellulose Insulation, LFCI, genannt. Gemäss der vorliegenden Erfindung sind LFCI faserartige (faserige) Materialien; Granulate bzw. granulierte Dämmstoffe sind von der vorliegenden Erfindung nicht umfasst.

Nachfolgend wird die Erfindung, insbesondere Verfahren und Materialien, unter Bezugnahme auf die Figuren näher erläutert.
Fig. 1 zeigt schematisch das erfindungsgemässe Verfahren zur Herstellung von LFCI, wobei in der oberen Grafik die Ausgestaltung in einer Linie ohne Zwischenlager und in der unteren Grafik die Ausgestaltung mit unabhängiger Papier- und Holzfaserlinie sowie die Verwendung von Zwischenlagern dargestellt sind.
Fig. 2 zeigt im Vergleich dazu bekannte Verfahren zur Herstellung von LFCI auf Basis Papier oder Holz.

In den Figuren stehen M für Mühle, T für Trockner, S für Sprühapparat, R für Recyclierleitung, Z für Zwischenspeicher sowie BSM (1) bzw. BSM (s) für Brandschutzmittel (flüssig bzw. fest); gestrichelte Bereiche sind optional; die Indizes P und H stehen für Papier und Holz.

Die Erfindung betrifft in einem ersten Aspekt verbesserte Zellulosedämmstoffe (LFCI), insbesondere faserige Zellulosedämmstoffe, umfassend (d.h. enthaltend oder bestehend aus) (a) eine Mischung aus Papierfasern und Holzfasern und (b) Additive.

LFCI können prinzipiell aus allen zellulosehaltigen Materialien hergestellt werden. Bisher wurden LFCI entweder aus Papierfasern oder aus Holzfasern hergestellt. Neu wurde gefunden, dass LFCI, enthaltend eine Mischung von Papierfasern und Holzfasern, besonders gute mechanische Eigenschaften aufweisen. Diese neuen LFCI können mit dem erfindungsgemässen Verfahren, aber auch mit bekannten Verfahren, hergestellt werden.

Nachfolgend wird das erfindungsgemässe LFCI, insbesondere dessen einzelne Komponenten, näher erläutert.

Der Begriff "Papierfasern" ist bekannt und umfasst vorwiegend den Einsatz von Makulatur Papier (insbesondere Zeitungspapier) und Post-consumer waste (Recycling Papier), welches in mehreren Produktionsschritten zerkleinert und aufgefasert wird. Diese Papierfasern sind besonders geeignet im Zusammenhang mit den erfindungsgemässen LFCI weil die Papierfasern ein berechenbares Fliessverhalten garantieren, das ein sicheres Befüllen eines Holraumes ermöglicht.

Der Begriff "Holzfasern" ist bekannt und umfasst vorwiegend den Einsatz von Nadelholz (bevorzugt Fichte und Tanne) die in mehreren Produktionsschritten zerkleinert und aufgefasert werden. Besonders geeignet im Zusammenhang mit den erfindungsgemässen LFCI ist die Eigenschaft als "Stützfunktion" und Ergänzung zu den Papierfasern.

Der Begriff "Additive" ist im Zusammenhang mit LFCI bekannt und umfasst alle Materialien, die die Eigenschaften von LFCI positiv beeinflussen, insbesondere Brand-Glimmschutzmittel, Fungizide, Bindemittel.

Der Begriff "Brandschutzmaterial" ("BSM", auch Flammschutzmittel genannt) ist bekannt und umfasst flüssige bzw. gelöste Brandschutzmittel. Bevorzugte flüssige BSM sind wässrige Lösungen die zumindest 50% einer Bor-, Aluminium- oder Phosphor-Verbindung enthalten (typischerweise Borsäure-Derivate, Aluminate, Phosphate). Das flüssige BSM kann weitere Additivkomponenten enthalten.

Der Begriff "Fungizide" ist bekannt und umfasst die im Gebiet bekannten Verbindungen, wie bspw. anionische Tenside, metallorganische Verbindungen, halogenierte aromatische Verbindungen. Geeignete Fungizide sind bspw. in Nägele (DE 1982977, insbes. S.2, 2. und letzter Absatz), erwähnt; dieses Dokument wird vollumfänglich durch Referenz einbezogen.

Der Begriff "Bindemittel" ist bekannt und umfasst die im Gebiet bekannten Verbindungen, wie bspw. Tallharz, Balsamharz oder Ligninsulfonat. Geeignete Bindemeittel sind bspw. in Willoc et al (DE 19516186, insbes. Sp. 3) erwähnt; dieses Dokument wird vollumfänglich durch Referenz einbezogen.

In einer vorteilhaften Ausführungsform betrifft die Erfindung LFCI in welcher das Verhältnis von Papierfasern / Holzfasern im Bereich 80/20 bis 20/80 bevorzugt 60/40 bis 40/60, eingestellt ist. In diesem Bereich werden optimale Werte für ein setzungssicheres Befüllen der Hohlräume bei geringstem Materialbedarf erreicht.

In einer weiteren vorteilhaften Ausführungsform betrifft die Erfindung LFCI in welcher das Verhältnis Zellulosefasern / Additive im Bereich 97/3 bis 88/12 bevorzugt 91/9 bis 93/7 eingestellt ist. Es hat sich überraschend gezeigt, das mit dem erfindungsgemässen Verfahren derartig geringe Mengen an Additiven ausreichend sind, die normativen Vorgaben für LFCI zu erreichen. Die Additive befinden sich im Wesentlichen auf oder in den genannten Zellulosefasern, können aber zusätzlich auch als einzelne Partikel im LFCI vorliegen.

Der Begriff "Zellulosefasern" ist bekannt und umfasst Papier- und Holzfasern. Zellulosefasern haben typischerweise einen Faseranteil (d.h. Partikel mit einer Grösse von ca. 1/2 mm) und Feinanteil (d.h. Partikel mit einer Grösse von ca. 0.2 mm). Der Begriff "Fasern" umfasst im Rahmen der vorliegenden Erfindungen auch Faserbündel und Faseragglomerate, wie sie aus der Zerfaserung resultieren. Fasern (einschliesslich ∼bündel und ∼agglomerate) haben im Gegensatz zu Granulaten keine im wesentlichen sphärische Struktur.

Wie bereits erwähnt, ist die erfindungsgemässe LFCI besonders als Einblasdämmung geeignet. Eine derartige Einblasdämmung erfüllt oder übertrifft die einschlägigen normativen Bestimmungen für solche Materialien. Die Erfindung betrifft daher ebenfalls eine Einblasdämmung, umfassend eine LFCI wie hier beschrieben sowie Baukörper, enthaltend LFCI bzw. eine Einblasdämmung wie hier beschrieben. Die Einblasdämmung kann im Dach-, Wand- und / oder Bodenbereich eingesetzt werden.

Die Erfindung betrifft in einem zweiten Aspekt ein Verfahren zur Herstellung von LFCI, dadurch gekennzeichnet dass (a) Zellulosefasern bereit gestellt werden; (b) Brandschutzlösung bereit gestellt wird; (c) besagte Brandschutzlösung auf besagte Fasern gesprüht wird; (d) das so erhaltene Material im Luftstrom getrocknet wird wobei das LFCI entsteht und (e) ggf. die im Abluftstrom enthaltenen Stäube in (a) recycliert werden.

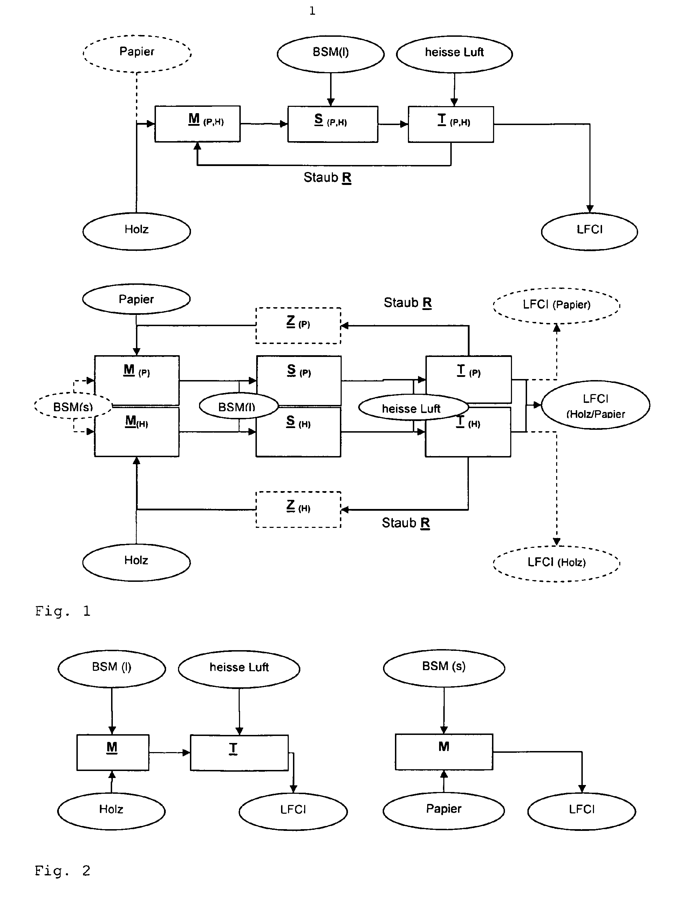

Nachfolgend wird der erfindungsgemässe Prozess, insbesondere die einzelnen Teilschritte, sowie eine dafür geeignete Anlage, näher erläutert. In Figur 1 ist ein grobes Prozess-Schema der erfindungsgemässen Verfahrens (oben) und der bekannten Verfahren (unten) angegeben. Gestrichelte Linien bedeuten optionale Ergänzungen.

Das erfindungsgemässe Verfahren ist anwendbar auf die hier beschriebenen LFCI, aber auch auf an sich bekannte LFCI, sofern diese Additive (wie BSM) enthalten. Zur Erreichung des gewünschten Brandverhaltens werden den LFCI typischerweise Additive aus der Gruppe der Brandschutzmittel (BSM) zugesetzt. Es ist wünschenswert, möglichst wenig BSM zuzusetzen, z.B. weniger als 12%, bevorzugt nicht mehr als 10%, insbesondere nicht mehr als 5%, im fertigen Produkt. Die Zugabe von BSM erweist sich im technischen Massstab als schwierig, da eine gleichmässige Verteilung sicher gestellt werden muss und eine Verkrustung der Produktionsanlage vermieden werden muss. Diese Probleme werden durch das erfindungsgemässe Verfahren umgangen.

Das erfindungsgemässe Verfahren kann kontinuierlich geführt werden, d.h. die Schritte (a) - (e) werden kontinuierlich geführt. Typische Produktionsraten ("Kapazitäten) für eine Prozessstrasse nach dem hier beschriebenen Verfahren liegen bei über 3t LFCI/h. In einer Ausgestaltung des erfindungsgemässen Verfahrens werden mehr als 2t/h (bspw. 3t/h) Papierfasern und mehr als 2t/h (bspw. 3t/h) Holzfasern kontinuierlich bereitgestellt. Dies führt zu einer Produktionsrate (Kapazität) von über 4t/h (bspw. 6 t/h).

Das erfindungsgemässe Verfahren kann ohne Entstaubung geführt werden, d.h. der in den einzelnen Schritten ggf. gebildete Feinanteile können in den nächsten Schritt mitgeführt werden ohne das Verfahren negativ zu beeinflussen. Sofern keine Entfernung der Feinanteile vorgenommen wird, ist es vorteilhaft, den Schritt (e) durchzuführen. Ob eine Entstaubung durchgeführt wird, hängt unter anderem von der Qualität des Einsatzmaterials (insbesondere der Papierfasern) und der gewünschten Produktqualität ab.

Schritt (a): Die Ausgangsmaterialien dieses Schrittes, Zellulosefasern (insbesondere Holzfasern und Papierfasern) sind bekannt und kommerziell erhältlich. Vorteilhaft werden Zellulosefasern verwendet, die eine Mischung aus Papier- und Holzfasern im Verhältnis 80/20 bis 20/80 sind. Das Gemisch aus Zellulosefasern kann separat zur Produktionsstrasse erzeugt werden oder direkt aus den einzelnen Komponenten auf der Produktionsstrasse. Vorteilhaft werden geeignete Ausgangsmaterialien, wie zerkleinertes Papier und Holzstücke einer Mühle M kontinuierlich zugeführt und dort zu einem Gemisch aus Zellulosefasern verarbeitet.

Schritt (b): Die Ausgangsmaterialien dieses Schrittes, flüssige Brandschutzmittel (BSM) sind bekannt und kommerziell erhältlich. In den bisherigen Verfahren wurde das BSM typischerweise als Feststoff zugegeben. Ferner erfolgte die Zugabe zu einem früheren Zeitpunkt des Verfahrens, nämlich vor oder in der (Papier-)mühle. Erfindungsgemäss erfolgt die Zugabe nach der Mühle in Form einer Flüssigkeit mit anschliessendem Trocknungsschritt. Optional können im erfindungsgemässen Verfahren zusätzlich feste BSM in oder vor der Mühle (M) zudosiert werden. Diese Massnahme bietet einen zusätzlichen Schutz gegen die Brand- und Explosionsgefahr in der Mühle.

Schritt (c): Das Aufsprühen einer Lösung ist an sich bekannt und erfolgt mit kommerziell erhältlichen Apparaten. Die im Schritt (c) eingesetzte Additiv-Lösung enthält zumindest ein Brandschutzmittel und ggf. weitere Komponenten, wie Fungizide. Diese Komponenten sind vorstehend beschrieben.

Schritt (d): In einer vorteilhaften Ausgestaltung erfolgt die Trocknung mit heisser Luft. Die dabei entstehende feuchte Abluft enthält typischerweise mitgerissene Feinanteile. Am Ende der Trocknung wird LFCI erhalten, welches mit BSM und ggf. weiteren Additiven modifiziert ist.

Schritt (e): Die im Luftstrom von Schritt (d) mitgetragenen Feinanteile werden vorteilhaft in einen vorgelagerten Prozessschritt des Verfahrens, bspw. die Mühle, recykliert. Dies erfolgt vorteilhaft mit einer oder mehreren Recyclierleitungen (R). Diese Massnahme reduziert den Verbrauch an Additiven, ohne die Produktqualität negativ zu beeinflussen.

Typischerweise fällt bei Papierfasern, hergestellt aus Papier geringer Qualität, mehr Staub an der dem Prozess entnommen werden kann. Dieser Staub kann entweder bei Papierfasern, hergestellt aus Papier hoher Qualität, oder bei einer gewünschten 2. Qualität LCFI kontrolliert wieder zugeführt werden. In einer Ausführungsform betrifft die Erfindung daher ein Verfahren wie hier beschrieben, in dem die im Luftstrom von Schritt (d) mitgetragenen Feinanteile abgetrennt und zwischengelagert werden um bedarfsgerecht in einen vorgelagerten Prozessschritt des Verfahrens recykliert zu werden. Diese Verfahrensvariante hat den Vorteil, dass Schwankungen in der Qualität des Ausgangsmaterials ausgeglichen werden können und / oder die Eigenschaften des produzierten LFCI feinjustiert werden können.

In einer weiteren Ausgestaltung des Verfahrens werden je eine unabhängige Papierfaserlinie und eine Holzfaserlinie vorgesehen. In dieser Ausgestaltung werden die Ausgangsmaterialien, Papierfasern und Holzfasern, in den Schritten a), b), c) und d) parallel geführt und dann zu den erfindungsgemässen LFCI gemischt. Diese Ausgestaltung hat den Vorteil, dass sowohl erfindungsgemässe LFCI als auch solche auf reiner Papier- und / oder reiner Holzbasis hergestellt werden können. Ferner können die einzelnen Prozessschritte und Anlagen auf die entsprechenden Ausgangsmaterialien hin optimiert werden.

Das erfindungsgemässe Verfahren wird auf einer speziell dafür adaptierten Anlage durchgeführt. Somit betrifft die Erfindung auch eine kontinuierliche Anlage zur Herstellung von LFCI, umfassend (i) eine Mühle (M) welche Zellulosefasern erzeugt, (ii) einen danach angeordneten SprühApparat (S) welcher eine oder mehrere Additiv-Lösungen auf die Zellulosefasern aufsprüht und (iii) einen danach angeordneten Trockner (T), welcher mittels heisser Luft betrieben wird und den gewünschten Trocknungsgrad des produzierten LFCI einstellt, dadurch gekennzeichnet, dass die staubige Abluft des Trockners (T) über eine oder mehrere Recyclierleitungen (R) in die Mühle (M) geführt wird. Die Einzelnen Module der Anlage (M); (S); (T) sind an sich bekannt und werden ggf. an die Erfordernisse des hier beschriebenen Verfahrens adaptiert.

Die Anlage kann in einer oder mehreren Linien ausgestaltet sein. In einer Ausgestaltung verfügt die erfindungsgemässe Anlage über eine Papierfaserlinie (vgl. Fig. 1, Index P) und eine Holzfaserlinie (vgl. Fig. 1, Index H). In dieser Ausgestaltung liegen mehrere Apparate (M), (S), (T), und ggf. (R) und (Z) vor.

Die Anlage kann ferner einen oder mehrere Zwischenspeicher (Z) für die in der Recyclierleitung (R) transportierten Materialien verfügen. In einer Ausgestaltung verfügt die erfindungsgemässe Anlage über einen Zwischenspeicher (Z) für jede Recyclierleitung (R).

LFCI, hergestellt nach dem erfindungsgemässen Verfahren, erfüllen die genannte Norm, können auf an sich bekannte Weise weiter verarbeitet werden und weisen einen niedrigen Gehalt an Additiven, insbesondere BSM, auf. Ohne sich an eine Theorie gebunden zu fühlen, wird davon ausgegangen, dass das erfindungsgemässe Verfahren eine besonders gleichmässige Verteilung der Additive auf der Oberfläche der Zellulosefasern sicher stellt und so die gewünschte Wirkung (z.B. Brandschutz, fungizide Wirkung) trotz geringerer Gesamtkonzentration beobachtet wird. Die Erfindung betrifft daher auch LFCI, hergestellt nach dem hier beschriebenen Verfahren.

Die Erfindung betrifft in einem dritten Aspekt die Verwendung der erfindungsgemässen LFCI zur Dämmung von (bzw. als Dämmstoff) in Bauwerken und damit auch ein Verfahren zur Herstellung einer Einblasdämmung. Nachfolgend wird dieser Aspekt der Erfindung näher erläutert.

Die erfindungsgemässen LFCI können nach an Sich bekannten Methoden zu Einblasdämmungen, auf der Baustelle oder in einem Werk, weiterverarbeitet werden. Insbesondere ist es möglich, diese LFCI auf der Baustelle mit handelsüblichen Maschinen (z.B. Einblasmaschinen) zu verarbeiten. Die Erfindung betrifft daher auch ein Verfahren zur Herstellung einer Einblasdämmung, dadurch gekennzeichnet, dass LFCI wie hier beschrieben in Hohlräume eines Bauwerkes eingeblasen werden.

Der Begriff "Hohlräume eines Bauwerkes" umfasst verschiedene Bereiche in Bauwerken im Dach-, Wand- und Bodenbereich; wie (i) zwischen Wänden (bspw. an Aussenwänden (wie zwischen Fassade und tragender Struktur) oder Innenwänden) (ii) an Böden, (iii) an Dachkonstruktionen. Der Begriff umfasst somit insbesondere Hohlräume der obersten Geschossdecke, Hohlräume in Dachschrägen; Drempelräume; Zweischaliges Mauerwerk; Hohlräume im Holzrahmenbau; Installationsschächte.

Die nachstehend genannten Beispiele dienen der weiteren Erläuterung der Erfindung; sie sollen die Erfindung in keiner Weise limitieren.

Herstellung von LFCI. In einer Technikumsanlage werden folgende LFCI unter Verwendung einer flüssigen BSM - Lösung hergestellt. Die BSM Lösung enthält ein Gemisch von Ammoniumsalzen. Bekannte Produktionsverfahren verwenden trockene BSM in kristalliner oder pulvriger Form; Tests haben gezeigt, dass die gleichen Zuschlagstoffe in Pulverform 3-6% höher dosiert werden müssen, um den gewünschten Brand- und Schimmelschutz zu garantieren.

| Nr. | BSM-Lösung | Holzfasern / Papierfasern | Brand- / Schimmelschutz |
|---|---|---|---|
| 1 | 12% trocken | 50 / 50 | Nicht erfüllt |
| 2 | 8.2% nass | 50 / 50 | erfüllt |
| 3 | 8.0% nass | 50 / 50 | Teilw. erfüllt |

Messungen: Die vorstehend hergestellten erfindungsgemässen LFCI werden mit kommerziellen LFCI verglichen; dabei werden Dichte und relative Rückstellkraft / Setzungssicherheit berücksichtigt. Es zeigt sich, dass Papierfasern (Marktanteil 99%) erst ab einer Verdichtung > ca. 52kg/m3 setzungssicher eingebaut werden können. Die bekannten Holzfasern bei einer Dichte von 40 - 42kg/m3 nicht setzungssicher waren. Die erfindungsgemässe Mischung mit 50% Papierfasern und 50% Holzfasern war bei einer Einblasdichte von 40 - 42 kg setzungssicher und es war in mehreren Versuchen eine saubere, berechenbare Befüllung möglich.

| Nr. | Dichte kg/m3 | Papierfasern | Holzfasern | LFCI |
|---|---|---|---|---|
| 1 | 32-35* | n.e | n.e | n.e |
| 2 | 40-42* | n.e. | n.e | erfüllt |
| 3 | 50-55* | erfüllt | erfüllt | erfüllt |

| | | | | |
|---|---|---|---|---|
| *Messwerte ohne Risiko Zuschlag; in der Praxis werden ca. 8-12 % höhere Einblasdichten empfohlen. | | | | |

## Patentansprüche

1. Zellulosedämmstoffe (LFCI), insbesondere faserige Zellulosedämmstoffe, bestehend aus
a. 88 - 97 % einer Mischung von Papierfasern und Holzfasern im Verhältnis 80/20 bis 20/80 und
b. 3 - 12 % Additiven, insbesondere ausgewählt aus der Gruppe umfassend Flammschutzmittel, Fungizide, Bindemittel.

2. LFCI gemäss Anspruch 1 bestehend aus
a. 91 - 93 % einer Mischung von Papierfasern und Holzfasern im Verhältnis 40/60 bis 60/40 und
b. 3 - 9 % Additiven.

3. LFCI gemäss einem der Ansprüche 1 - 2, **dadurch**
**gekennzeichnet dass** die Papierfasern hergestellt sind aus Zeitungspapier.

4. LFCI gemäss einem der Ansprüche 1 - 2, **dadurch**
**gekennzeichnet dass** die Holzfasern hergestellt sind aus Nadelholz.

5. LFCI gemäss einem der Ansprüche 1 - 2, **dadurch**
**gekennzeichnet dass** die Additive ausgewählt sind aus der Gruppe der Flammschutzmittel.

6. Einblasdämmung, umfassend eine LFCI gemäss einem der Ansprüche 1 - 5.

7. Baukörper, enthaltend eine LFCI gemäss einem der Ansprüche 1 - 5 und / oder eine Einblasdämmung gemäss Anspruch 6.

8. Kontinuierliches Verfahren zur Herstellung von faserigen LFCI, **dadurch gekennzeichnet dass**
a. Zellulosefasern bereit gestellt werden;
b. eine Brandschutzlösung bereit gestellt wird;
c. besagte Brandschutzlösung auf besagte Fasern gesprüht wird;
d. das so erhaltene Material im Luftstrom getrocknet wird;
e. die im dabei entstehenden Abluftstrom enthaltenen Stäube in a) recycliert werden.

9. Verfahren gemäss Anspruch 8, welches mit einer Produktionsrate von mindestens 4t LFCI / h geführt wird.

10. Verfahren gemäss Anspruch 8, wobei die Zellulosefasern eine Mischung aus Papier- und Holzfasern im Verhältnis 80/20% bis 20/80% sind.

11. Verfahren gemäss Anspruch 10, wobei die Papier- und Holzfasern
entweder in den in den Schritten a), b), c) und d) parallel geführt und dann gemischt werden,
oder in Schritt a) gemischt und in den Schritten b), c) und d) als Mischung weiter verarbeitet werden.

12. LFCI, hergestellt nach einem Verfahren gemäss einem der Ansprüche 8 - 11.

13. Verwendung von LFCI gemäss einem der Ansprüche 1 - 5 als Dämmstoff für Baukörper.

14. Verfahren zur Herstellung einer Einblasdämmung,
**dadurch gekennzeichnet, dass** LFCI gemäss einem der Ansprüche 1 - 5 in Hohlräume eines Bauwerkes insbesondere im Dach-, Wand- und / oder Bodenbereich eines Bauwerkes, eingeblasen werden.

15. Kontinuierliche Anlage zur Herstellung von LFCI, insbesondere LFCI gemäss einem der Ansprüche 1 - 5, umfassend
a. eine oder mehrere Mühle (M) welche Zellulosefasern erzeugt,
b. einen oder mehrere danach angeordneten SprühApparat (S) welcher eine oder mehrere Additiv-Lösungen auf die Zellulosefasern aufsprüht und
c. einen oder mehrere danach angeordneten Trockner (T), welcher mittels heisser Luft betrieben wird und den gewünschten Trocknungsgrad des produzierten LFCI einstellt,
wobei die staubige Abluft des Trockners (T) über eine oder mehrere Recyclier-Leitungen (R) in die Mühle (M) geführt wird
und wobei ggf. die Leitung (R) mit einem Zwischenlager (Z) verbunden ist.
